# EUROPÄISCHE PATENTSCHRIFT

(11) **EP 0 615 022 B1**
(45) Veröffentlichungstag und Bekanntmachung des Hinweises auf die Patenterteilung: **30.12.1998**
(21) Anmeldenummer: 94102455.6
(22) Anmeldetag: 18.02.1994
(51) Int. Cl.: E01F 9/00, G07B 15/00, G02B 27/00, H04B 10/00, E01F 11/00

(54) **Anordnung zur optischen Datenübertragung**
Device for optical data transmission
Dispositif de transmission optique de données

(30) Priorität: 09.03.1993 DE 4307354
(43) Veröffentlichungstag der Anmeldung: 14.09.1994
(73) Patentinhaber: ROBERT BOSCH GMBH, 70442 Stuttgart (DE)
(72) Erfinder: Koenig, Winfried, Dipl.-Ing., D-76327 Pfinztal-Berghausen (DE)

(56) Entgegenhaltungen:
- EP-A- 0 413 948
- US-A- 5 182 555
- US-A- 5 198 797
- PATENT ABSTRACTS OF JAPAN vol. 7 no. 176 (P-214) [1321] ,4.August 1983 & JP-A-58 080616 (MITSUBISHI DENKI K.K.) 14.Mai 1983,

## Beschreibung

### Stand der Technik

Die Erfindung betrifft eine Anordnung zur optischen Datenübertragung zwischen einer ortsfesten Verkehrseinrichtung, insbesondere einer Bake, und einem einzelnen, die Verkehrseinrichtung passierenden Fahrzeug, wobei die Verkehrseinrichtung und das Fahrzeug jeweils weinigstens eine Sende- und Empfangseinheit aufweisen, und die Verkehrseinrichtung Einrichtungen besitzt, die eine genaue Identifikation einzelner Fahrzeuge in bestimmten abgegrenzten Bereichen ermöglicht.

Es ist bekannt, Informationen zwischen Fahrzeugen und einer ortsfesten Verkehrseinrichtung mittels optischer Datenübertragung, insbesondere mit Infrarotstrahlung, auszutauschen. Dieser optische Datenaustausch wird unter anderem in Verkehrsortungs- und -leitsystemen eingesetzt, um einerseits vom Fahrzeug Informationen und Daten, beispielsweise Reisezeiten und/oder Stauzeiten, an ortsfeste Verkehrseinrichtungen zu übertragen und um andererseits von den ortsfesten Verkehrseinrichtungen Informationen und Daten, wie beispielsweise Leitinformationen zur Zielführung des Fahrzeugs in das Fahrzeug zu übertragen.

Es ist vorgeschlagen worden, diese optische Datenübertragung zwischen ortsfester Verkehrseinrichtung und Fahrzeug bei der Erhebung von Gebühren zur Straßenbenutzung und der Zugangskontrolle der Fahrzeuge zu bestimmten Straßenabschnitten, beispielsweise bei Autobahnen, einzusetzen. Beim Einsatz dieser optischen Datenübertragung findet zwischen dem Fahrzeug und der ortsfesten Verkehrseinrichtung ein Dialog statt, der eine Identifikation des Fahrzeugs ermöglicht sowie eine genaue Zuordnung einer berechneten Gebühr für das spezielle Fahrzeug und eine Abbuchung bzw. Zuordnung der Gebühr zu dem Fahrzeug, einschließlich der Erteilung einer Zugangsberechtigung für das Fahrzeug, beinhaltet. Hierbei muß jedoch sichergestellt sein, da in der Regel, insbesondere bei Autobahnen, mehrere Fahrzeuge gleichzeitig über mehrere Spuren eine ortsfeste Verkehrseinrichtung passsieren können, daß ohne jeden Zweifel eine genaue Zuordnung bestimmter Informationen zu bestimmten Fahrzeugen erfolgen kann.

In der EP 0 413 948 ist bereits vorgeschlagen worden, bei einer über mehrere Spuren einer Straße angebrachten brückenartigen Bake jeweils einer Fahrspur eine ortsfeste Sende- bzw. Empfangseinrichtung zuzuordnen, die durch eine Maske mit einer vorgebbaren Blendenöffnung in der Bildebene jeweils einer entsprechenden Wirkfläche im Fahrbereich, insbesondere einer Fahrspur, begrenzt ist, innerhalb welcher ein Informationsaustausch durch Lichtaussendung bzw. Lichtempfang mit einer Sende- bzw. Empfangseinrichtung des Fahrzeugs möglich ist. Es ist vorgesehen, um die Sende- und Empfangskeulen von Fahrzeug und Verkehrseinrichtung auf verschiedenen Fahrbahnen voneinander zu trennen, nicht nach vorn oder hinten, sondern direkt nach oben zu senden, da dadurch der geringste Abstand zwischen Fahrzeug und Bake bei der Durchfahrt unter der Verkehrseinrichtung ausgenutzt wird.

Hierzu ist vorgesehen, die Sende- und Empfangseinheit des Fahrzeugs zwischen Windschutzscheibe und Innenspiegel des Fahrzeugs als separate Einheit auszubilden und anzubringen. Hierbei ist jedoch nachteilig, da sich die Sende- und Empfangseinheit des Fahrzeugs zwar in einem Bereich befindet, der die Sicht des Fahrzeugführers nach vorne nicht beeinträchtigt, dieser Bereich von einem am Fahrzeug angebrachten Scheibenwischer nicht erfaßt wird, so daß bei einer nicht auszuschließenden äußeren Verschmutzung der Windschutzscheibe im Befestigungsbereich der Sende- und Empfangseinheit des Fahrzeugs es zu Verschmutzungen kommen kann, die eine optische Datenübertragung wesentlich beeinträchtigen. Gerade jedoch eine schlechte optische Datenübertragung kann zu Fehlinformationen führen, die eine sichere Zuordnung von Informationen zu einem bestimmten Fahrzeug verhindern.

Weiterhin ist nachteilig, daß die Sende- und Empfangseinheit des Fahrzeugs als separates Bauteil ausgebildet ist und einen zusätzlichen Einbauplatz benötigt.

### Vorteile der Erfindung

Der Erfindung liegt die Aufgabe zugrunde, eine Anordnung zur optischen Datenübertragung der gattungsgemäßen Art zu schaffen, mit der eine sichere und effektive Datenübertragung zwischen einer Verkehrseinrichtung und einem Fahrzeug mit geringem Aufwand möglich ist.

Erfindungsgemäß wird diese Aufgabe durch die kennzeichnenden Merkmale des Hauptanspruchs gelöst.

Es wurde gefunden, daß wenn bei der Anordnung zur optischen Datenübertragung die Sende- und Empfangseinheit des Fahrzeugs Komponenten eines head-up displays aufweist, eine besonders einfache und platzsparende Anordnung möglich ist, da schon vorhandene optische und elektronische Bauelemente für das head-up display gleichzeitig zur optischen Datenübertragung an eine ortsfesten Verkehrseinrichtung mitbenutzt werden können. Sehr vorteilhaft ist dabei, da die optischen Komponenten des head-up displays sehr leistungsfähig sind, daß eine problemlose Datenübertragung zu der ortsfesten Verkehrseinrichtung möglich ist. Gleichzeitig erfolgt die Datenübertragung zwischen dem Fahrzeug und der Verkehrseinrichtung in einem Bereich des Fahrzeugs, der durch am Fahrzeug angebrachte Scheibenwischer im Bereich der Frontscheibe bei beeinträchtigter Sicht durch den Fahrzeugführer in aller Regel gereinigt wird, so daß eine äußere Verschmutzung des Fahrzeugs keine negativen Einflüsse auf die optische Datenübertragung haben kann.

In Ausgestaltung der Erfindung ist vorgesehen, daß für die optische Datenübertragung und für die Bereitstellung eines virtuellen Bildes über das head-up display ein gemeinsames optisches System verwendet wird. Hierbei ist sehr vorteilhaft, da das optische System für das head-up display sehr leistungsstark ist, daß diese Komponenten für eine sehr effiziente Datenübertragung mitgenutzt werden können und bei Verwendung sowieso vorhandener optischer Komponenten kein zusätzliches Einbauvolumen im Bereich des Armaturenbrettes des Fahrzeugs benötigt wird.

So ist in weiterer vorteilhafter Ausgestaltung der Erfindung vorgesehen, daß das optische System derart ausgebildet ist, daß es die für die Bildung des virtuellen Bildes und die für die Datenübertragung benötigten Signale separieren kann. Dies erfolgt vorteilhafterweise durch Anordnung eines nur die optischen Daten reflektierenden Spiegels oder eines teildurchlässigen Spiegels, so daß die Signale sicher auseinander gehalten werden können.

Weitere vorteilhafte Ausgestaltungen der Erfindung ergeben sich aus den in den Unteransprüchen aufgeführten Maßnahmen.

### Zeichnung

Die Erfindung wird nachfolgend in Ausführungsbeispielen anhand der zugehörigen Zeichnungen näher erläutert. Es zeigen:
- Figur 1: eine Teilansicht eines Fahrzeugs im Schnitt;
- Figur 2: einen Teil des optische Systems im Blockschaltbild und
- Figur 3: einen Teil des optischen Systems im Blockschaltbild in einem weiteren Ausführungsbeispiel.

### Beschreibung der Ausführungsbeispiele

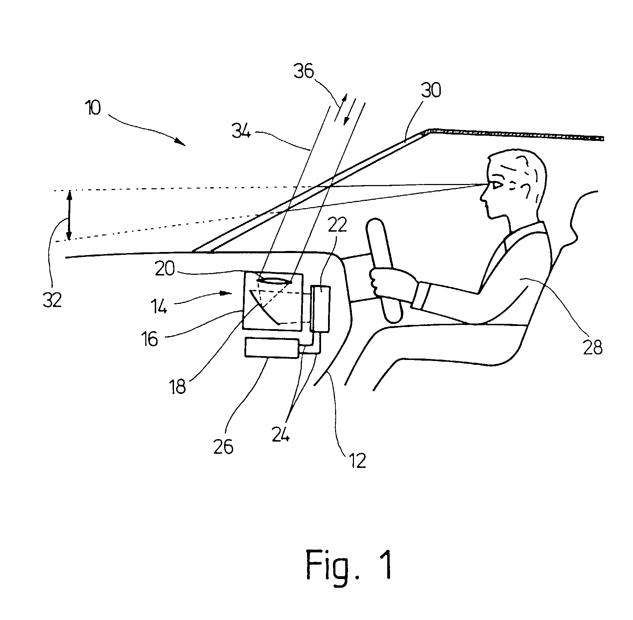

In Figur 1 ist ein allgemein mit 10 bezeichnetes Fahrzeug in einer Teilansicht gezeigt. Das Fahrzeug 10 weist in einem Armaturenbrett 12 ein zu einem head-up display 14 gehörendes optisches System 16 auf. Das optische System 16 besitzt einen Hohlspiegel 18 sowie eine Linse 20. Dem optischen System 16 ist eine Baueinheit 22 zugeordnet, die über Leitungen 24 mit Informationen bereitstellenden Mitteln 26, beispielsweise Sensoren, Meßgeräten u.s.w. verbunden ist. In dem Fahrzeug sitzt ein Fahrzeugführer 28, der während der Fahrt in Richtung der Windschutzscheibe 30 blickt.

Nachfolgend soll die Funktion des head-up displays 14 zum besseren Verständnis beschrieben werden. Die Baueinheit 22 wandelt die von den Mitteln 26 bereitgestellten Informationen in optische Signale um und sendet ein der momentanen Anzeige entsprechendes Licht aus. Dieses Licht wird auf den Hohlspiegel 18 geworfen und von diesem ein der Anzeige entsprechendes Bild über die Linse 20 auf die Windschutzscheibe 30 des Fahrzeugs 10 in einem durch die Stellung des Hohlspiegels 18 vorherbestimmbaren Bereich projiziert. Der in dem Fahrzeug 10 sitzende Fahrzeugführer 28 nimmt nunmehr die Anzeige als virtuelles Bild an der Stelle 32 vor der Windschutzscheibe 30 wahr. Auf weitere Einzelheiten der Entstehung des virtuellen Bildes entsprechend der über die Baueinheit 22 bereitgestellten Anzeige soll hier nicht weiter eingegangen werden. Die Baueinheit 22 sendet neben den für die Bereitstellung des virtuellen Bildes notwendigen Informationen optische Signale im Infrarotbereich aus, die ebenfalls über den Hohlspiegel 18 reflektiert und durch die Windschutzscheibe 30 im Bereich der hier angedeuteten Strahlengänge 34 in Richtung auf eine in Figur 1 nicht dargestellte, über dem Fahrzeug befindliche Bake umgelenkt werden. Die Bake besitzt ebenfalls eine Sende- und Empfangseinheit, die im Infrarotbereich arbeitet und die bei Passieren des Fahrzeugs 10 durch die hier angedeuteten Pfeile 36 Informationen mit der Infrarotsende- und Empfangseinheit des Fahrzeugs 10, die in der Baueinheit 22 angeordnet ist, austauscht. Dieser Datenaustausch kann beispielsweise die Gebührenerfassung und Abrechnung sowie Erteilung einer Zugangskontrolle an einer auf einer Autobahn zu durchfahrenden Mautstelle sein. Dadurch daß für die optische Infrarotdatenübertragung die Komponenten des head-up displays 14 mit verwendet werden, treten die Informationssignale in einem Bereich der Windschutzscheibe 30 aus dem Fahrzeug aus, der für die Sicht des Fahrzeugführers 28 von ganz entscheidender Bedeutung ist. Dieser Bereich befindet sich in aller Regel innerhalb des Wirkbereiches eines hier nicht dargestellten Scheibenwischers, so daß dieser Bereich im wesentlichen von äußeren Verschmutzungen befreit ist, und damit eine Behinderung des optischen Datenaustausches zwischen dem Fahrzeug 10 und der durchfahrenen Bake ausgeschlossn werden kann. Gleichzeitig findet der Datenaustausch in annähernd senkrechter Richtung nach oben statt, so daß zwischen Fahrzeug 10 und Bake zum Zeitpunkt des optischen Datenaustausches der geringst mögliche Abstand gewahrt ist.

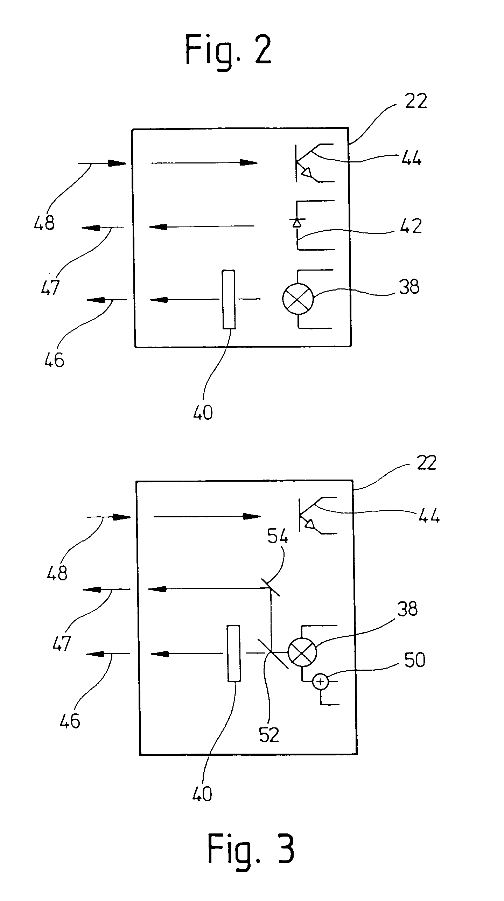

In Figur 2 wird der Aufbau der Baueinheit 22 verdeutlicht. Die Baueinheit 22 weist eine Lichtquelle 38 sowie ein mit der Lichtquelle 38 zusammenwirkendes Display 40 auf. Weiterhin besitzt die Baueinheit 22 einen Infrarotsender 42 und einen Infrarotempfänger 44. Die Lichtquelle 38 sowie der Infrotsender 42 und der Infrarotempfänger 44 sind, wie angedeutet, mit weiteren hier nicht dargestellten Bauteilen zur Bereitstellung der Informationen bzw. zur Auswertung verbunden, auf deren einzelne Wirkungsweise im Rahmen dieser Erfindung nicht näher eingegangen werden soll. Die Lichtquelle 38 sendet in Verbindung mit dem Display 40 ein einer bestimmten Information entsprechendes Licht in Richtung des Pfeiles 46 aus, wobei das Licht, wie in Figur 1 gezeigt, auf den Hohlspiegel 18 trifft und von diesem entsprechend reflektiert wird. Der Infrarotsender 42 sendet im nicht sichtbaren Bereich liegende optische Infrarotsignale aus (Pfeil 47), die ebenfalls auf den Hohlspiegel 18 treffen und von diesem reflektiert werden. Die von der bereits erwähnten Bake kommenden Informationen im Infrarotbereich werden durch den Hohlspiegel 18 auf die Baueinheit 22 reflektiert und hier vom Infrarotempfänger 44, wie durch den Pfeil 48 angedeutet, aufgenommen und einer weiteren Verarbeitung zugeführt.

Durch diese besonders einfache und platzsparende Anordnung ergibt sich, daß die optischen Komponenten des head-up displays 14, insbesondere des Hohlspiegels 18, mitbenutzt werden können und so kein zusätzlicher Einbauraum für weitere Komponenten notwendig ist. Zur besseren Herausfilterung des für den Infrarotempfänger 44 bestimmten Lichtanteils kann die Infrarotstrahlung durch einen hier nicht dargestellten, zwischen Hohlspiegel 18 und Baueinheit 22 angeordneten, teildurchlässigen Spiegel, der nur die Infrarotstrahlung durchläßt, entkoppelt werden.

Der Infrarotsender 42 ist unabhägig von der Lichtquelle 38 des head-up displays 14 angeordnet und kann ebenfalls durch einen hier nicht dargestellten teildurchlässigen Spiegel, der seitlich neben der Lichtquelle 38 angeordnet ist, entkoppelt werden. Der Anteil der Infrarotstrahlung, welcher über den Hohlspiegel 18 an die Windschutzscheibe 30 projiziert wird und dort durch Reflexion in das Auge des Fahrers gelangt, liegt außerhalb der spektralen Empfindlichkeit des menschlichen Auges und wird daher nicht störend wahrgenommen.

In Figur 3 ist ein weiteres Ausführungsbeispiel der Baueinheit 22 gezeigt, wobei gleiche Teile mit gleichen Bezugszeichen versehen sind. Der Infrarotsender 50 ist hier als Teil der Lichtquelle 38 für das head-up display 14 ausgeführt. Die Lichtquelle 38 wird dabei mit genügend hoher Frequenz moduliert, damit eine genügend hohe Leistung im Infrarotbereich emittiert werden kann. Diese Modulation der Lichtquelle 38 stört bei genügend hoher Frequenz nicht das später entstehende virtuelle Bild des head-up display 14. Zwischen Lichtquelle 38 und Display 40 ist ein erster Spiegel 52 angeordnet.

Dieser Spiegel 52 ist als teildurchlässiger Spiegel ausgebildet, der nur den Infrarotanteil des Spektrums der Lichtquelle 38 abtrennt und diesen über einen zweiten Spiegel 54 am Display 40 vorbei dem optischen System 16 bzw. dem Hohlspiegel 18 zuleitet. Der sichtbare Teil des Spektrums der Lichtquelle 38 wird durch den teildurchlässigen Spiegel 52 hindurchgelassen und gelangt zum Display 40 und dient hier zur Erzeugung des Bildes des head-up displays 14. Der Infrarotempfänger 44 ist, wie bereits in Figur 2 erwähnt, separat ausgebildet und empfängt die über den Hohlspiegel 18 umgelenkten Infrarotstrahlen unter eventueller Zwischenschaltung eines hier nicht dargestellten, für Infrarotstrahlen teildurchlässigen Spiegels direkt. Durch die Ausnutzung der Lichtquelle 38 neben der Bereitstellung für das virtuelle Bild des head-up display 14 gleichzeitig als Infrarotsender kann ein weiteres bereits vorhandenes leistungsstarkes Bauteil für die optische Datenübertragung im Infrarotbereich mit genutzt werden, ohne daß zusätzliche aufwendige Maßnahmen zu treffen sind.

## Patentansprüche

1. Anordnung zur optischen Datenübertragung zwischen einer ortsfesten Verkehrseinrichtung, insbesondere einer Bake und einem einzelnen, die Verkehrseinrichtung passierenden Fahrzeug, wobei die Verkehrseinrichtung und das Fahrzeug jeweils wenigstens eine Sende- und Empfangseinheit aufweisen und die Verkehrseinrichtung Einrichtungen besitzt, die eine genaue Identifikation einzelner Fahrzeuge in bestimmten abgegrenzten Bereichen ermöglicht, **dadurch gekennzeichnet**, daß die Sende- und Empfangseinheit (42, 44) des Fahrzeugs (10) Komponenten eines head-up display (14) aufweist.

2. Anordnung nach Anspruch 1, **dadurch gekennzeichnet**, daß für die optische Übertragung eines head-up display-Bildes und der Daten ein gemeinsames optisches System (16) verwendet wird.

3. Anordnung nach einem der vorhergehenden Ansprüche, **dadurch gekennzeichnet**, daß das optische System (16) eine Baueinheit (22) aufweist, die die Signale für das head-up display-Bild und die Daten für die optische Datenübertragung trennt.

4. Anordnung nach einem der vorhergehenden Ansprüche, **dadurch gekennzeichnet**, daß als Sendeeinheit für die optische Datenübertragung eine Lichtquelle (38) des head-up displays (14) verwendet wird.

5. Anordnung nach einem der vorhergehenden Ansprüche, **dadurch gekennzeichnet**, daß die Signale für die optische Datenübertragung über einen Infrarotsender abgestrahlt werden.

6. Anordnung nach einem der vorhergehenden Ansprüche, **dadurch gekennzeichnet**, daß die Baueinheit (22) für die Entkopplung des head-up display-Bildes und der optischen Datensignale einen teildurchlässigen Spiegel (52) aufweist.

7. Anordnung nach einem der vorhergehenden Ansprüche, **dadurch gekennzeichnet**, daß als Infrarotsender (42) eine Infrarotdiode dient.

8. Anordnung nach einem der vorhergehenden Ansprüche, **dadurch gekennzeichnet**, daß der Infrarotempfänger (44) über einen weiteren teildurchlässigen Spiegel, der die empfangenen optischen Daten entkoppelt, angesteuert wird.

## Claims

1. Arrangement for optical data transmission between a fixed traffic device, in particular a beacon, and an individual vehicle passing the traffic device, the traffic device and the vehicle each having at least one transmit and receive unit, and the traffic device having devices which permit precise identification of individual vehicles in specific limited regions, characterized in that the transmit and receive unit (42, 44) of the vehicle (10) has components of a head-up display (14).

2. Arrangement according to Claim 1, characterized in that a common optical system (16) is used for the optical transmission of a head-up display image and of the data.

3. Arrangement according to one of the preceding claims, characterized in that the optical system (16) has a component (22) which separates the signals for the head-up display image and the data for the optical data transmission.

4. Arrangement according to one of the preceding claims, characterized in that a light source (38) of the head-up display (14) is used as transmit unit for the optical data transmission.

5. Arrangement according to one of the preceding claims, characterized in that the signals for the optical data transmission are emitted via an infrared transmitter.

6. Arrangement according to one of the preceding claims, characterized in that the component (22) for decoupling the head-up display image and the optical data signals has a semi-transparent mirror (52).

7. Arrangement according to one of the preceding claims, characterized in that an infrared diode is used as infrared transmitter (42).

8. Arrangement according to one of the preceding claims, characterized in that the infrared receiver (44) is actuated by means of a further semi-transparent mirror which decouples the received optical data.

## Revendications

1. Disposition pour la transmission optique de données entre une installation routière fixe notamment un balisage et un véhicule passant devant l'installation routière, l'installation routière et le véhicule ayant chacun au moins une unité d'émission et de réception et l'installation routière comporte des moyens permettant une identification précise des différents véhicules dans les plages délimitées de manière définie,
caractérisée en ce que
l'unité d'émission et de réception (42, 44) du véhicule (10) comporte des composants pour un affichage frontal (14).

2. Dispositif selon la revendication 1,
caractérisé en ce qu'
il comporte un système optique commun (16) pour la transmission optique d'une image d'affichage frontal et des données.

3. Dispositif selon l'une quelconque des revendications précédentes,
caractérisé en ce que
le système optique (16) comprend une unité (22) qui sépare les signaux destinés à l'image d'affichage frontal et les données pour la transmission optique des données.

4. Dispositif selon l'une des revendications précédentes,
caractérisé en ce que
l'unité d'émission pour la transmission optique des données est une source lumineuse (38) du dispositif d'affichage frontal (14).

5. Dispositif selon l'une des revendications précédentes,
caractérisé en ce que
les signaux de transmission optique sont émis par un émetteur infrarouge.

6. Dispositif selon l'une des revendications précédentes,
caractérisé en ce que
l'unité (22) comporte un miroir semi-transparent (52) pour découpler l'image d'affichage frontal et les signaux de données optiques.

7. Dispositif selon l'une quelconque des revendications précédentes,
caractérisé en ce que
l'émetteur infrarouge (42) est une diode infrarouge.

8. Dispositif selon l'une quelconque des revendications précédentes,
caractérisé en ce que
le récepteur infrarouge (44) est commandé par l'intermédiaire d'un autre miroir semi-transparent qui assure le découplage des données optiques reçues.
